# EUROPEAN PATENT SPECIFICATION

(11) **EP 4 360 931 B1**
(45) Date of publication and mention of the grant of the patent: **01.01.2025**
(21) Application number: 23186038.8
(22) Date of filing: 18.07.2023
(51) Int. Cl.: B60K 37/20, B60K 35/215, B60K 35/40, B62J 50/22

(54) **VEHICLE PANEL COMPONENT**
FAHRZEUGPLATTENBAUTEIL
COMPOSANT DE PANNEAU DE VÉHICULE

(30) Priority: 27.10.2022 JP 2022172148
(43) Date of publication of application: 01.05.2024
(73) Proprietor: Yamaha Hatsudoki Kabushiki Kaisha, Iwata-shi, Shizuoka 438-8501 (JP)
(72) Inventor: Nopparat, Sirilerk, Samut Prakan Province (TH); Takaeo, Phanawat, Samut Prakan Province (TH); Fujisaka, Masahiko, Samut Prakan Province (TH)
(74) Representative: Grünecker Patent- und Rechtsanwälte PartG mbB

(56) References cited:
- EP-A1- 3 730 333
- US-A1- 2005 186 396
- US-A1- 2012 052 262

## Description

The present invention relates to a vehicle panel component according to the preamble of independent claim 1. Such a vehicle panel component can be taken from the prior art document US 2012/052262 A1.

It has been conventionally disclosed that a minute structure is provided on a panel face of a meter panel or so forth (see JP 6153550 B2).

The panel face of the meter panel or so forth has a decorative function; hence, a vehicle panel component, having such a panel face, is desired to be enhanced in texture of the panel face thereof.

It is an object of the present invention to provide a vehicle panel component that enhancement in texture of a panel face thereof can be achieved with a simple configuration. According to the present invention said object is solved by a vehicle panel component having the features of independent claim 1. Preferred embodiments are laid down in the dependent claims.

A vehicle panel component according to an aspect includes a panel face. The panel face is divided into a plurality of sections. Each of the plurality of sections is made in shape of a polygon. The plurality of sections are disposed adjacent to each other. The each of the plurality of sections includes a plurality of parallel lines disposed therewithin. The plurality of parallel lines are formed by a plurality of recesses and protrusions. A pattern of the plurality of parallel lines is different between adjacent sections of the plurality of sections.

In the vehicle panel component according to the present aspect, the panel face is divided into the plurality of sections, each of which is made in shape of a polygon. The plurality of parallel lines, disposed in each of the plurality of sections, are formed by the plurality of recesses and protrusions. A pattern of the plurality of parallel lines is different between adjacent sections of the plurality of sections. In other words, a stereoscopic shape is formed by a plurality of steps formed by the plurality of recesses and protrusions in each of the plurality of sections; hence, reflected light, entering the eyes of a rider, is changed in range and intensity. Consequently, the reflected light stands out in relative movement between the eyes of the rider and the plurality of steps formed by the plurality of recesses and protrusions. Besides, the pattern of the plurality of parallel lines is different between adjacent sections of the plurality of sections; hence, the reflected light on the adjacent section of the plurality of sections appears to change in a different manner from each other. Accordingly, the adjacent section of the plurality of sections appears to change in different manners from each other in accordance with change in angle of reflection of external light or change in point of view of the rider; hence, such a visual effect as a lenticular image or hologram can be obtained on the panel face. As a result, enhancement in texture of the panel face can be achieved with a simple configuration. Besides, each of the plurality of sections is made in shape of a polygon; hence, further enhancement in texture of the panel face can be achieved with a simple configuration.

An angle of the plurality of parallel lines is different between the adjacent sections of the plurality of sections. In this case, the adjacent sections of the plurality of sections can be made appear to change in different manners from each other in accordance with change in angle of reflection of external light or change in point of view of the rider with a simple configuration.

The each of the plurality of sections may be made in shape of a triangle. In this case, it is made easy to recognize the shape of the each of the plurality of sections; hence, it is made easier to obtain such a visual effect as a lenticular image or hologram on the panel face.

The each of the plurality of sections may be made in shape of an acute-angled triangle. In this case, it is made easy to recognize the shape of the each of the plurality of sections; hence, it is made easier to obtain such a visual effect as a lenticular image or hologram on the panel face.

At least one of the plurality of sections may include a first side, a second side, and a third side. The second side is connected to the first side and has a dimension greater than a dimension of the first side. The third side is connected to the first side and the second side and has a dimension greater than the dimension of the second side. In this case, the panel face is made more eye-catching than a configuration that all the plurality of sections are made in shape of an equilateral triangle.

The dimension of the first side may be greater than or equal to 5 mm. The dimension of the third side may be greater than or equal to 7 mm and less than or equal to 9 mm. In this case, it is made easier to obtain such a visual effect as a lenticular image or hologram on the panel face.

At least one of the plurality of sections may have an area of greater than or equal to 18 mm² and less than or equal to 24 mm². In this case, it is made easier to obtain such a visual effect as a lenticular image or hologram on the panel face.

The plurality of parallel lines may be equal in width to each other. In this case, it is made easy to recognize the plurality of sections; hence, it is made easier to obtain such a visual effect as a lenticular image or hologram on the panel face.

Each of the plurality of parallel lines may have a width dimension of greater than or equal to 0.2 mm and less than or equal to 0.4 mm. Each of the plurality of parallel lines may have a width dimension of greater than or equal to 0.24 mm and less than or equal to 0.36 mm. Each of the plurality of parallel lines may have a width dimension of greater than or equal to 0.27 mm and less than or equal to 0.33 mm. In this case, it is made easy to recognize the plurality of sections in accordance with change in angle of reflection of external light or change in point of view of the rider; hence, it is made easier to obtain such a visual effect as a lenticular image or hologram on the panel face.

The plurality of sections may include a first section and a second section. The second section is disposed adjacent to the first section. The first section may include a plurality of first parallel lines disposed therewithin. The second section may include a plurality of second parallel lines disposed therewithin. The plurality of first parallel lines and the plurality of second parallel lines may extend to be directed to intersect with a section line dividing the first and second sections. In this case, it is made easy to recognize a boundary between the plurality of sections by the section line; hence, it is made easier to obtain such a visual effect as a lenticular image or hologram on the panel face.

The plurality of first parallel lines may be different in extending direction from all section lines forming the first section. In this case, it is made easy to recognize the contour of the first section; hence, it is made easier to obtain such a visual effect as a lenticular image or hologram on the panel face.

The panel face may be provided as a meter panel of the vehicle. In this case, the meter panel is not only made eye-catching but also is enhanced in visibility.

The plurality recesses and protrusions may include a plurality of recesses and a plurality of protrusions. The plurality of recesses may be different in surface color from the plurality of protrusions. In this case, each adjacent pair of the plurality of sections can be made appear to change in different manners from each other responsively in accordance with change in angle of reflection of external light or change in point of view of the rider; hence, further enhancement in texture of the panel face can achieved.

Overall, according to the present invention, it is made possible to provide a vehicle panel component that enhancement in texture of a panel face thereof can be achieved with a simple configuration.

### BRIEF DESCRIPTION OF THE DRAWINGS

FIG. 1 is a side view of a straddled vehicle including a vehicle panel component.
FIG. 2 is a plan view of portion of a meter panel.
FIG. 3 is a schematic plan view of portion of a panel face.
FIG. 4 is a closeup view of portion of FIG. 3.

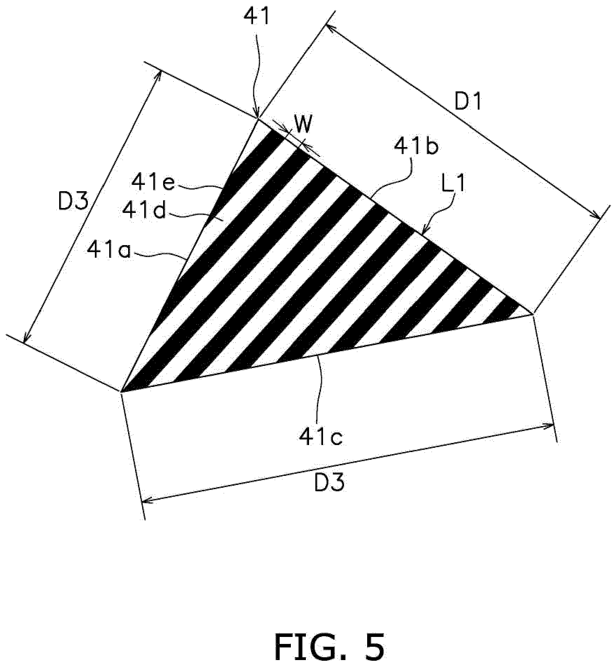

FIG. 5 is a diagram for explaining a first section in detail.

### DETAILED DESCRIPTION OF EMBODIMENTS

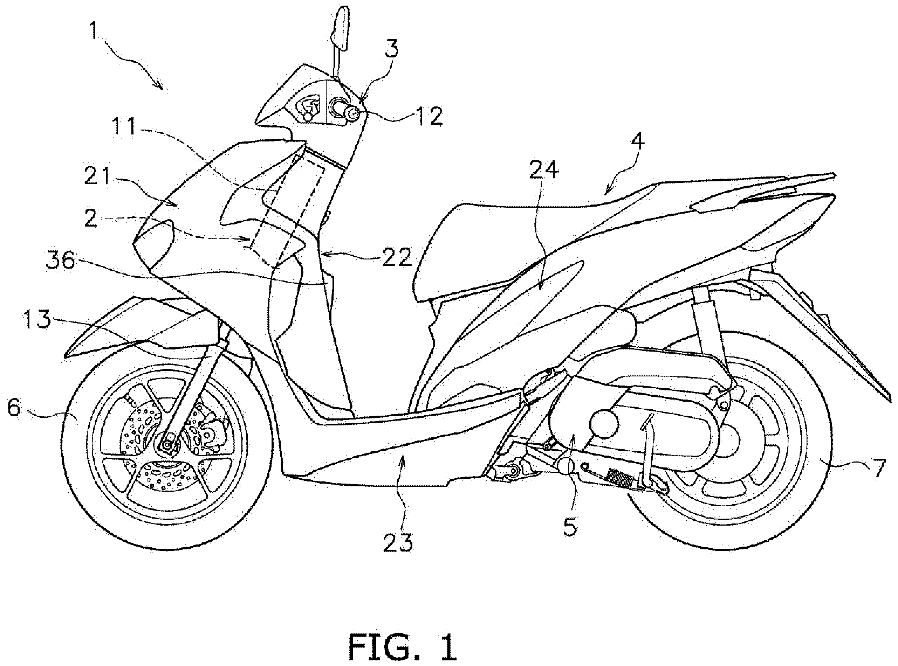

A vehicle panel component according to a preferred embodiment of the invention will be hereinafter explained with reference to drawings. FIG. 1 is a side view of a straddled vehicle 1 including a vehicle panel component 10 according to the preferred embodiment. The vehicle panel component according to the preferred embodiment has a decorative function; hence, the vehicle panel component is a vehicle decorative component.

The straddled vehicle 1 includes a vehicle body frame 2, a steering device 3, a seat 4, a power unit 5, a front wheel 6, and a rear wheel 7.

The vehicle body frame 2 includes a head pipe 11. The vehicle body frame 2 includes a down frame, a lower frame, and a rear frame, all of which are not illustrated in the drawings. The head pipe 11 is disposed in the middle of the vehicle in a vehicle width direction.

The steering device 3 is supported by the head pipe 11 so as to be turnable. The steering device 3 includes a handle member 12 and a front fork 13. The handle member 12 is connected to the front fork 13. The front fork 13 is connected to the front wheel 6.

The seat 4 is disposed directly behind the head pipe 11. The power unit 5 is disposed directly below the seat 4. The power unit 5 is supported by the vehicle body frame 2. The front wheel 6 is supported by the front fork 13 so as to be rotatable. The rear wheel 7 is rotated by a drive force generated by the power unit 5.

The straddled vehicle 1 includes a front cover 21, a leg shield 22, a lower cover 23, and a rear cover 24. The front cover 21 covers the head pipe 11 from front. The leg shield 22 is disposed directly in front of the seat 4. The leg shield 22 covers the head pipe 11 from behind. The lower cover 23 is disposed between the leg shield 22 and the rear cover 24. The rear cover 24 is disposed directly below the seat 4.

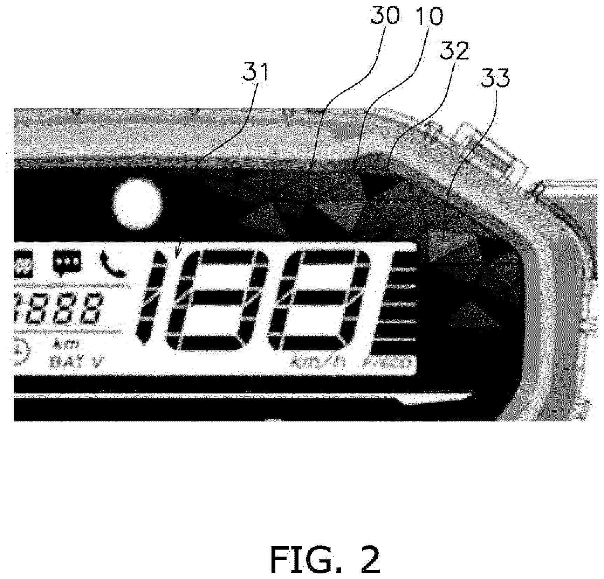

As shown in FIG. 2, the straddled vehicle 1 includes a meter panel 30. The meter panel 30 is disposed in the middle of the vehicle in the vehicle width direction. The meter panel 30 is disposed on an upper portion of the handle member 12.

The meter panel 30 includes a display face 31 and a panel face 32. The display face 31 displays vehicle speed and so forth on a liquid crystal screen. The panel face 32 is disposed on the circumferential edge of the display face 31. The panel face 32 may be integrated with the display face 31.

The vehicle panel component 10 is provided as the meter panel 30. In the present preferred embodiment, the vehicle panel component 10 includes the panel face 32. In other words, the panel face 32 of the meter panel 30 composes portion of the vehicle panel component 10. The panel face 32 is made of, for instance, a resin material.

The panel face 32 is divided into a plurality of sections 33, each of which is made in shape of a polygon. The plural sections 33 are disposed adjacent to each other. In the present preferred embodiment, each of the plural sections 33 is made in shape of a triangle. In more detail, each of the plural sections 33 is made in shape of an acute-angled triangle.

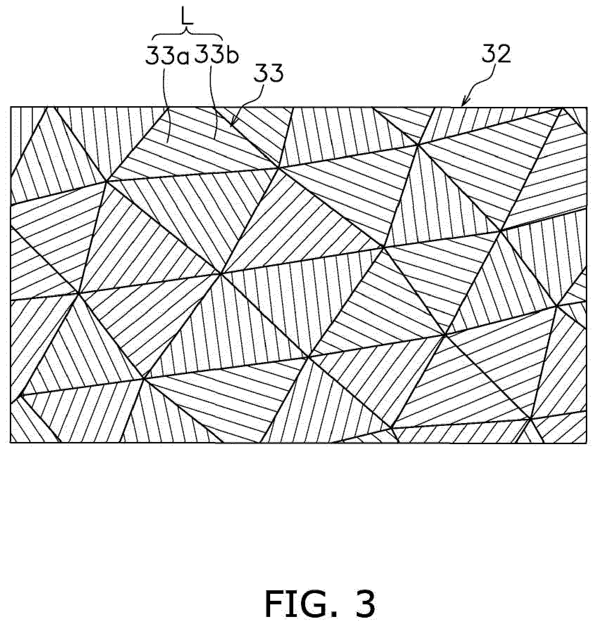

FIG. 3 is a schematic plan view of portion of the panel face 32. As shown in FIG. 3, each of the plural sections 33 includes a plurality of parallel lines L. The plural parallel lines L are disposed within each of the plural sections 33. The plural parallel lines L are provided on the surface of the panel face 32. The plural parallel lines L are formed by a plurality of recesses and protrusions. When described in detail, the plural parallel lines L are formed by alternately disposing a plurality of recesses 33a and a plurality of protrusions 33b. The plural recesses 33a and the plural protrusions 33b form a plurality of steps. The plural steps, formed by the plural recesses 33a and the plural protrusions 33b, are slight steps formed by, for instance, surface finishing such as painting. The plural recesses 33a are different in surface color from the plural protrusions 33b. The plural protrusions 33b have been processed by surface finishing. The plural protrusions 33b have been colored by painting. It should be noted that the plural recesses 33a may be colored by painting. In this case, the plural protrusions 33b are configured to further protrude from the surface of the panel face 32 than the plural recesses 33a.

The plural parallel lines L extend straight. The plural parallel lines L are equal in width to each other at least when disposed within an identical section. In other words, the plural recesses 33a and the plural protrusions 33b are equal in width to each other. It should be noted that in FIG. 3, the plural protrusions 33b are drawn as being narrow in width for making the drawing clearly viewable. In the present preferred embodiment, the plural parallel lines L are equal in width to each other in all the sections. It should be noted that the plural recesses 33a may be different in width from the plural protrusions 33b.

Each of the plural parallel lines L may have a width dimension of greater than or equal to 0.2 mm and less than or equal to 0.4 mm. Each of the plural parallel lines L may have a width dimension of greater than or equal to 0.24 mm and less than or equal to 0.36 mm. Each of the plural parallel lines L may have a width dimension of greater than or equal to 0.27 mm and less than or equal to 0.33 mm. In the present preferred embodiment, each of the plural parallel lines L is set to have a width of 0.3 mm.

A pattern of the plural parallel lines L is different between adjacent sections of the plural sections 33. For example, an angle of the plural parallel lines L is different between the adjacent sections of the plural sections 33.

When the angles of plural parallel lines L between the adjacent sections of the plural sections 33 are epual, the pattern of the plural parallel lines L is different between the adjacent sections of the plural sections 33 by such a positional arrangement that the plural recesses 33a and the plural protrusions 33b of the plural sections 33 are displaced from those in the adjacent sections of the plurality of sections 33. In other words, the plural parallel lines L may be disposed such that the plural recesses 33a and the plural protrusions 33b are not aligned straight with those in the adjacent sections of the plurality of sections 33.

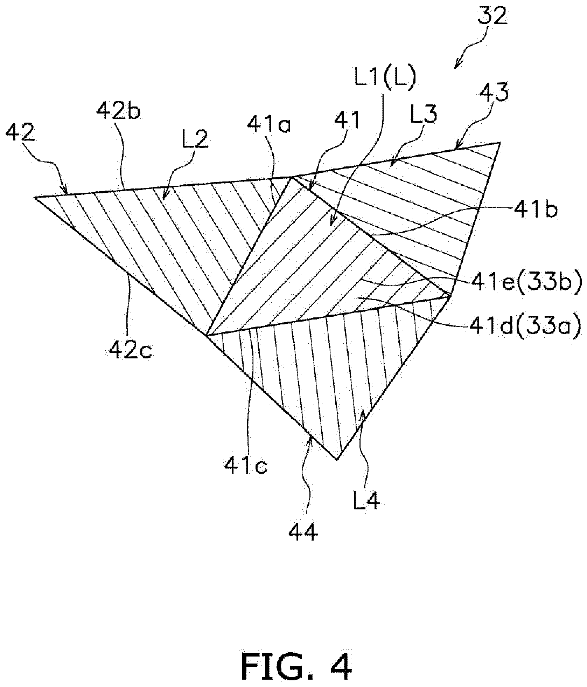

FIG. 4 is a closeup view of portion of FIG. 3. In FIG. 4 as well, the plural protrusions 33b are drawn as being narrow in width. As shown in FIG. 4, the plural sections 33 are composed of a first section 41, a second section 42, a third section 43, and a fourth section 44. The second to fourth sections 42 to 44 are disposed adjacent to the first section 41

The first section 41 includes a first side 41a, a second side 41b connected to the first side 41a, and a third side 41c connected to the first and second sides 41a and 41b. The first section 41 is formed by the first, second, and third sides 41a, 41b, and 41c.

The first side 41a is a section line dividing the first and second sections 41 and 42. The second side 41b is a section line dividing the first and third sections 41 and 43. The third side 41c is a section line dividing the first and fourth sections 41 and 44. In the explanation described below, the first side 41a, the second side 41b, and the third side 41c may be referred to as a first section line 41a, a second section line 41b, and a third section line 41c, respectively, on an as-needed basis.

The first, second, and third sides 41a, 41b, and 41c are different in dimension from each other. The dimension (D2) of the second side 41b is greater than the dimension (D1) of the first side 41a. The dimension (D3) of the third side 41c is greater than the dimension (D2) of the second side 41b.

The dimension D1 of the first side 41a may be greater than or equal to 5 mm. The dimension D3 of the third side 41c may be greater than or equal to 7 mm and less than or equal to 9 mm. In the present preferred embodiment, the dimension D1 of the first side 41a, the dimension D2 of the second side 41b, and the dimension D3 of the third side 41c are set to be 6 mm, 7 mm, and 8 mm, respectively.

The first section 41 may have an area of greater than or equal to 18 mm² and less than or equal to 24 mm². In the present preferred embodiment, the area of the first section 41 is set to be 22.3 mm².

The first section 41 includes a plurality of first parallel lines L1. The plural first parallel lines L1 are disposed within the first section 41. The plural first parallel lines L1 extend straight. The plural first parallel lines L1 are formed by alternately disposing a plurality of recesses 41d and a plurality of protrusions 41e, both of which are provided on the surface of the first section 41. The recesses 41d are different in surface color from the protrusions 41e. The protrusions 41e are processed by surface finishing. The protrusions 41e are colored by painting. Accordingly, the recesses 41d and the protrusions 41e form a plurality of slight steps therebetween. It should be noted that the recesses 41d may be colored by painting. In this case, the protrusions 41e are configured to further protrude from the surface of the panel face 32 than the recesses 41d.

The plural first parallel lines L1 are equal in width to each other. In other words, each recess 41d and each protrusion 41e are equal in width to each other. Each of the plural first parallel lines L1 may have a width dimension of greater than or equal to 0.2 mm and less than or equal to 0.4 mm. Each of the plural first parallel lines L1 may have a width dimension of greater than or equal to 0.24 mm and less than or equal to 0.36 mm. Each of the plural first parallel lines L1 may have a width dimension of greater than or equal to 0.27 mm and less than or equal to 0.33 mm. In the present preferred embodiment, the width (W) of each of the plural first parallel lines L1 is set to be 0.3 mm. It should be noted that each recess 41d may be different in width from each protrusion 41e.

The plural first parallel lines L1 extend to be directed to intersect with the first section line 41a. The plural first parallel lines L1 extend to be directed to intersect with the second section line 41b. The plural first parallel lines L1 extend to be directed to intersect with the third section line 41c. In other words, the plural first parallel lines L1 are different in extending direction from all the section lines 41a to 41c forming the first section 41.

As shown in FIG. 4, the second section 42 is disposed adjacent to the first side 41a of the first section 41. The second section 42 includes a plurality of second parallel lines L2. The plural second parallel lines L2 are disposed within the second section 42. The plural second parallel lines L2 are formed by alternately disposing a plurality of recesses and a plurality of protrusions in a comparable manner to the plural first parallel lines L1. The plural second parallel lines L2 extend straight. The plural second parallel lines L2 are equal in width to each other. The width of each of the plural second parallel lines L2 is equal to the width W of each of the plural first parallel lines L1. It should be noted that the width of each of the plural second parallel lines L2 may be different from the width W of each of the plural first parallel lines L1.

The plural second parallel lines L2 are different in pattern from the plural first parallel lines L1. When described in detail, the plural second parallel lines L2 are different in angle from the plural first parallel lines L1. In other words, the plural second parallel lines L2 extend to be directed to intersect with the plural first parallel lines L1. The plural second parallel lines L2 extend to be directed to intersect with the first section line 41a. The plural second parallel lines L2 are different in extending direction from all the section lines 41a, 42b, and 42c forming the second section 42.

The third section 43 is disposed adjacent to the second side 41b of the first section 41. The fourth section 44 is disposed adjacent to the third side 41c of the first section 41 Not only the relation between the third section 43 and the first section 41 but also that between the fourth section 44 and the first section 41 is approximately identical to that between the second section 42 and the first section 41; hence, the third section 43 and the fourth section 44 will be hereinafter explained briefly.

The third section 43 includes a plurality of third parallel lines L3. The plural third parallel lines L3 are different in pattern from the plural first parallel lines L1. The plural third parallel lines L3 are different in extending direction from all the section lines forming the third section 43.

The fourth section 44 includes a plurality of fourth parallel lines L4. The plural fourth parallel lines L4 are different in pattern from the plural first parallel lines L1. The plural fourth parallel lines L4 are different in extending direction from all the section lines forming the fourth section 44.

In the straddled vehicle 1 according to the present aspect, the panel face 32 of the vehicle panel component 10 is divided into the plural sections 33, each of which is made in shape of a polygon. The plural parallel lines L, disposed in each of the plural sections 33, are formed by a plurality of recesses and protrusions. One of each adjacent pair of the plural sections 33 is different in pattern of the plural parallel lines L from the other. In other words, a stereoscopic shape is formed by the plural steps formed by the plural recesses 33a and the plural protrusions 33b in each of the plural sections 33; hence, reflected light, entering the eyes of a rider, is changed in range and intensity. Consequently, the reflected light stands out in relative movement between the eyes of the rider and the plural steps formed by the plural recesses 33a and the plural protrusions 33b. Besides, one of each adjacent pair of the plural sections 33 is different in pattern of the plural parallel lines L from the other; hence, the reflected light on one of each adjacent pair of the plural sections 33 appears to change in a different manner from that on the other.

Accordingly, each adjacent pair of the plural sections 33 appears to change in different manners from each other in accordance with change in angle of reflection of external light or change in point of view of the rider; hence, such a visual effect as a lenticular image or hologram can be obtained on the panel face 32. As a result, enhancement in texture of the panel face 32 can be achieved with a simple configuration. Besides, each of the plural sections 33 is made in shape of a polygon; hence, further enhancement in texture of the panel face 32 can be achieved with a simple configuration. Furthermore, the panel face 32 is provided as the panel face of the meter panel 30; hence, the meter panel 30 is not only made eye-catching but also is enhanced in visibility.

One preferred embodiment has been explained above. The teaching related to the straddled vehicle 1 is not limited to a scooter, and alternatively, may be another type of vehicle. The meter panel 30 may be disposed further on the front or rear side than the handle member 12.

The display face 31 may be changed in configuration. The display face 31 may be made in form of an analog dial face.

The vehicle panel component 10 may be disposed on another member viewable from the outside. For example, the vehicle panel component 10 may be disposed on at least any one of the handle member 12, the front cover 21, the leg shield 22, the lower cover 23, and the rear cover 24. The vehicle panel component 10 may be disposed on a viewable member in another type of vehicle.

Each of the plural sections 33 may be changed in shape and/or dimension. Each of the plural sections 33 may be made in shape of a quadrilateral or pentagon. At least one of the plural sections 33 may be made in shape of an obtuse-angled triangle, equilateral triangle, or isosceles triangle.

The plural steps, formed by the plural recesses 33a and the plural protrusions 33b, may be formed with a different method from surface finishing such as painting.

### REFERENCE SIGNS LIST

- 10: Vehicle panel component
- 32: Panel face
- 33: Plural sections
- 33a: Plural recesses
- 33b: Plural protrusions
- 41: First section
- 41a: First side
- 41b: Second side
- 41c: Third side
- 42: Second section
- L: Plural parallel lines
- L1: Plural first parallel lines
- L2: Plural second parallel lines

## Claims

1. A vehicle panel component (10) comprising:
a panel face (32) divided into a plurality of sections (33), each of the plurality of sections (33) made in shape of a polygon, the plurality of sections (33) disposed adjacent to each other, wherein
the each of the plurality of sections (33) including a plurality of parallel lines disposed therewithin, the plurality of parallel lines (L) formed by a plurality of recesses (33a) and protrusions (33b), and
a pattern of the plurality of parallel lines (L) is different between adjacent sections of the plurality of sections (33), **characterized in that** one of each adjacent pair of an angle of the plurality of parallel lines (L) is different between the adjacent sections of the plurality of sections (33).

2. The vehicle panel component (10) according to claim 1, **characterized in that** the each of the plurality of sections (33) is made in shape of a triangle.

3. The vehicle panel component (10) according to claim 1, **characterized in that** the each of the plurality of sections (33) is made in shape of an acute-angled triangle.

4. The vehicle panel component (10) according to claim 2 or 3, **characterized in that** at least one of the plurality of sections (33) includes a first side (41a), a second side (41b), and a third side (41c), the second side (41b) connected to the first side (41a), the second side (41b) having a dimension greater than a dimension of the first side (41a), the third side (41c) connected to the first side (41a) and the second side (41b), the third side (41c) having a dimension greater than the dimension of the second side (41b).

5. The vehicle panel component (10) according to claim 4, **characterized in that** the dimension of the first side (41a) is greater than or equal to 5 mm, and
the dimension of the third side (41c) is greater than or equal to 7 mm and less than or equal to 9 mm.

6. The vehicle panel component (10) according to any one of claims 1 to 5,
**characterized in that** at least one of the plurality of sections (33) has an area of greater than or equal to 18 mm² and less than or equal to 24 mm².

7. The vehicle panel component (10) according to any one of claims 1 to 6,
**characterized in that** the plurality of parallel lines (L) are equal in width (W) to each other.

8. The vehicle panel component (10) according to claim 7, **characterized in that** each of the plurality of parallel lines (L) has a width (W) dimension of greater than or equal to 0.2 mm and less than or equal to 0.4 mm.

9. The vehicle panel component (10) according to claim 7, **characterized in that** each of the plurality of parallel lines (L) has a width (W) dimension of greater than or equal to 0.24 mm and less than or equal to 0.36 mm.

10. The vehicle panel component (10) according to claim 7, **characterized in that** each of the plurality of parallel lines (L) has a width (W) dimension of greater than or equal to 0.27 mm and less than or equal to 0.33 mm.

11. The vehicle panel component (10) according to any one of claims 1 to 10,
**characterized in that** the plurality of sections (33) include a first section (41) and a second section (42), the second section (42) disposed adjacent to the first section (41),
the first section (41) includes a plurality of first parallel lines (L1) disposed therewithin, the second section (42) includes a plurality of second parallel lines (L2) disposed therewithin, and
the plurality of first parallel lines (L1) and the plurality of second parallel lines (L2) extend to be directed to intersect with a section line (41a) dividing the first and second sections (41, 42).

12. The vehicle panel component (10) according to claim 11, **characterized in that** the plurality of first parallel lines (L1) are different in extending direction from all section lines (41a to 41c) forming the first section (41).

13. The vehicle panel component (10) according to any one of claims 1 to 12,
**characterized in that** the panel face (32) is provided as a meter panel (30) of the vehicle (1).

14. The vehicle panel component (10) according to any one of claims 1 to 13,
**characterized in that** the plurality of recesses (33a) and protrusions (33b) include a plurality of recesses (33a) and a plurality of protrusions (33b), and
the plurality of recesses (33a) are different in surface color from the plurality of protrusions (33b).

## Patentansprüche

1. Eine Fahrzeug-Panel-Komponente (10), die umfasst:
eine Panelfläche (32), die in eine Mehrzahl von Abschnitten (33) unterteilt ist, jeder der Mehrzahl von Abschnitten (33) ist in Form eines Polygons ausgebildet, die Mehrzahl von Abschnitten (33) sind benachbart zueinander angeordnet, wobei
jeder der Mehrzahl von Abschnitten (33) eine Mehrzahl von darin angeordneten parallelen Linien enthält, die Mehrzahl von parallelen Linien (L) ist durch eine Mehrzahl von Aussparungen (33a) und Vorsprüngen (33b) gebildet, und
ein Muster der Mehrzahl von parallelen Linien (L) ist zwischen benachbarten Abschnitten der Mehrzahl von Abschnitten (33) unterschiedlich, **dadurch gekennzeichnet, dass** eines von jedem benachbarten Paar eines Winkels der Mehrzahl von parallelen Linien (L) zwischen den benachbarten Abschnitten der Mehrzahl von Abschnitten (33) unterschiedlich ist.

2. Die Fahrzeug-Panel-Komponente (10) gemäß Anspruch 1, **dadurch gekennzeichnet, dass** jeder der Mehrzahl von Abschnitten (33) die Form eines Dreiecks hat.

3. Die Fahrzeug-Panel-Komponente (10) gemäß Anspruch 1, **dadurch gekennzeichnet, dass** jeder der Mehrzahl von Abschnitten (33) die Form eines spitzwinkligen Dreiecks hat.

4. Die Fahrzeug-Panel-Komponente (10) gemäß Anspruch 2 oder 3, **dadurch gekennzeichnet, dass** zumindest einer der Mehrzahl von Abschnitten (33) eine erste Seite (41a), eine zweite Seite (41b) und eine dritte Seite (41c) enthält, die zweite Seite (41b), die mit der ersten Seite (41a) verbunden ist, eine größere Abmessung als eine Abmessung der ersten Seite (41a) hat, die dritte Seite (41c) mit der ersten Seite (41a) und der zweiten Seite (41b) verbunden ist, wobei die dritte Seite (41c) eine größere Abmessung als die Abmessung der zweiten Seite (41b) hat.

5. Die Fahrzeug-Panel-Komponente (10) gemäß Anspruch 4, **dadurch gekennzeichnet, dass** die Abmessung der ersten Seite (41a) größer oder gleich 5 mm ist, und
die Abmessung der dritten Seite (41c) größer als oder gleich 7 mm und kleiner als oder gleich 9 mm ist.

6. Die Fahrzeug-Panel-Komponente (10) gemäß irgendeinem der Ansprüche 1 bis 5, **dadurch gekennzeichnet, dass** zumindest einer der Mehrzahl von Abschnitten (33) eine Fläche von mehr als oder gleich 18 mm² und weniger als oder gleich 24 mm² hat.

7. Die Fahrzeug-Panel-Komponente (10) gemäß irgendeinem der Ansprüche 1 bis 6, **dadurch gekennzeichnet, dass** die Mehrzahl von parallelen Linien (L) die gleiche Breite (W) wie die anderen haben.

8. Die Fahrzeug-Panel-Komponente (10) gemäß Anspruch 7, **dadurch gekennzeichnet, dass** jede der Mehrzahl von parallelen Linien (L) eine Breite (W) von mehr als oder gleich 0,2 mm und weniger als oder gleich 0,4 mm haben.

9. Die Fahrzeug-Panel-Komponente (10) gemäß Anspruch 7, **dadurch gekennzeichnet, dass** jede der Mehrzahl von parallelen Linien (L) eine Breite (W) von mehr als oder gleich 0,24 mm und weniger als oder gleich 0,36 mm haben.

10. Die Fahrzeug-Panel-Komponente (10) gemäß Anspruch 7, **dadurch gekennzeichnet, dass** jede der Mehrzahl von parallelen Linien (L) eine Breite (W) von mehr als oder gleich 0,27 mm und weniger als oder gleich 0,33 mm haben.

11. Die Fahrzeug-Panel-Komponente (10) gemäß irgendeinem der Ansprüche 1 bis 10, **dadurch gekennzeichnet, dass** die Mehrzahl von Abschnitten (33) einen ersten Abschnitt (41) und einen zweiten Abschnitt (42) enthalten, der zweite Abschnitt (42) ist benachbart zu dem ersten Abschnitt (41) angeordnet,
der erste Abschnitt (41) enthält eine Mehrzahl von ersten parallelen Linien (L1), die darin angeordnet sind,
der zweite Abschnitt (42) enthält eine Mehrzahl von zweiten parallelen Linien (L2), die darin angeordnet sind, und
die Mehrzahl der ersten parallelen Linien (L1) und die Mehrzahl der zweiten parallelen Linien (L2) verlaufen, so dass sie sich mit einer Schnittlinie (41a) schneiden, die den ersten und den zweiten Abschnitt (41, 42) unterteilt.

12. Die Fahrzeug-Panel-Komponente (10) gemäß Anspruch 11, **dadurch gekennzeichnet, dass** die Mehrzahl von ersten parallelen Linien (L1) sich in ihrer Erstreckungsrichtung von allen den ersten Abschnitt (41) bildenden Abschnittslinien (41a bis 41c) unterscheiden.

13. Die Fahrzeug-Panel-Komponente (10) gemäß irgendeinem der Ansprüche 1 bis 12, **dadurch gekennzeichnet, dass** die Panelfläche (32) als eine Anzeigetafel (30) des Fahrzeugs (1) vorgesehen ist.

14. Die Fahrzeug-Panel-Komponente (10) gemäß irgendeinem der Ansprüche 1 bis 13, **dadurch gekennzeichnet, dass** die Mehrzahl von Aussparungen (33a) und Vorsprüngen (33b) eine Mehrzahl von Aussparungen (33a) und eine Mehrzahl von Vorsprüngen (33b) enthält, und
die Mehrzahl von Aussparungen (33a) eine andere Oberflächenfarbe als die Mehrzahl von Vorsprüngen (33b) haben.

## Revendications

1. Composant de panneau de véhicule (10), comprenant :
une face de panneau (32) divisée en une pluralité de sections (33), chaque section de la pluralité de sections (33) présentant une forme de polygone, les sections de la pluralité de sections (33) étant adjacentes entre elles, dans lequel
lesdites chaque section de la pluralité de sections (33) comprennent une pluralité de lignes parallèles disposées à l'intérieur de celle-ci, la pluralité de lignes parallèles (L) étant formée par une pluralité de renfoncements (33a) et de protubérances (33b), et
un motif de la pluralité de lignes parallèles (L) est différent entre des sections adjacentes de la pluralité de sections (33),
**caractérisé en ce qu'**une paire de chaque paire adjacente d'un angle de la pluralité de lignes parallèles (L) est différente entre les sections adjacentes de la pluralité de sections (33).

2. Composant de panneau de véhicule (10) selon la revendication 1, **caractérisé en ce que** chaque section de la pluralité de sections (33) présente une forme de triangle.

3. Composant de panneau de véhicule (10) selon la revendication 1, **caractérisé en ce que** chaque section de la pluralité de sections (33) présente une forme de triangle acutangle.

4. Composant de panneau de véhicule (10) selon la revendication 2 ou 3, **caractérisé en ce qu'**au moins une section de la pluralité de sections (33) comprend un premier côté (41a), un deuxième côté (41b) et un troisième côté (41c), le deuxième côté (41b) étant connecté au premier côté (41a), le deuxième côté (41b) ayant une dimension supérieure à une dimension du premier côté (41a), le troisième côté (41c) étant connecté au premier côté (41a) et au deuxième côté (41b), le troisième côté (41c) ayant une dimension supérieure à la dimension du deuxième côté (41b).

5. Composant de panneau de véhicule (10) selon la revendication 4, **caractérisé en ce que** la dimension du premier côté (41a) est supérieure ou égale à 5 mm, et la dimension du troisième côté (41c) est supérieure ou égale à 7 mm et inférieure ou égale à 9 mm.

6. Composant de panneau de véhicule (10) selon l'une quelconque des revendications 1 à 5, **caractérisé en ce qu'**au moins une section de la pluralité de sections (33) présente une surface supérieure ou égale à 18 mm² et inférieure ou égale à 24 mm².

7. Composant de panneau de véhicule (10) selon l'une quelconque des revendications 1 à 6, **caractérisé en ce que** les lignes de la pluralité de lignes parallèles (L) sont égales entre elles en largeur (W).

8. Composant de panneau de véhicule (10) selon la revendication 7, **caractérisé en ce que** chaque ligne de la pluralité de lignes parallèles (L) présente une dimension en largeur (W) supérieure ou égale à 0,2 mm et inférieure ou égale à 0,4 mm.

9. Composant de panneau de véhicule (10) selon la revendication 7, **caractérisé en ce que** chaque ligne de la pluralité de lignes parallèles (L) présente une dimension en largeur (W) supérieure ou égale à 0,24 mm et inférieure ou égale à 0,36 mm.

10. Composant de panneau de véhicule (10) selon la revendication 7, **caractérisé en ce que** chaque ligne de la pluralité de lignes parallèles (L) présente une dimension en largeur (W) supérieure ou égale à 0,27 mm et inférieure ou égale à 0,33 mm.

11. Composant de panneau de véhicule (10) selon l'une quelconque des revendications 1 à 10, **caractérisé en ce que**
la pluralité de sections (33) comprend une première section (41) et une deuxième section (42), la deuxième section (42) étant adjacente à la première section (41),
la première section (41) comprend une pluralité de premières lignes parallèles (L1) disposées à l'intérieur de celle-ci,
la deuxième section (42) comprend une pluralité de deuxièmes lignes parallèles (L2) disposées à l'intérieur de celle-ci, et
la pluralité de premières lignes parallèles (L1) et la pluralité de deuxièmes lignes parallèles (L2) s'étendent pour être dirigées de manière à croiser une ligne de section (41a) divisant les première et deuxième sections (41, 42).

12. Composant de panneau de véhicule (10) selon la revendication 11, **caractérisé en ce que** les lignes de la pluralité de premières lignes parallèles (L1) sont différentes en direction d'extension de toutes les lignes de section (41a à 41c) formant la première section (41).

13. Composant de panneau de véhicule (10) selon l'une quelconque des revendications 1 à 12, **caractérisé en ce que** la face du panneau (32) est pourvue comme un panneau de compteur (30) du véhicule (1).

14. Composant de panneau de véhicule (10) selon l'une quelconque des revendications 1 à 13, **caractérisé en ce que** la pluralité de renfoncements (33a) et de protubérances (33b) comprend une pluralité de renfoncements (33a) et une pluralité de protubérances (33b), et la pluralité de renfoncements (33a) sont de couleur de surface différente de la pluralité de protubérances (33b).
